# EUROPÄISCHE PATENTANMELDUNG

(11) **EP 3 037 857 A1**
(43) Veröffentlichungstag der Anmeldung: **29.06.2016**
(21) Anmeldenummer: 14199787.4
(22) Anmeldetag: 22.12.2014
(51) Int. Cl.: G02B 7/182

(54) **Optische Baugruppe mit einem Kegelspiegel**

(71) Anmelder: HILTI Aktiengesellschaft, 9494 Schaan (LI)
(72) Erfinder: Sanchen, Guenter, 9472 Grabs (CH)
(74) Vertreter: Hilti Aktiengesellschaft Corporate Intellectual Property

(57) **Zusammenfassung**

Optische Baugruppe (31), aufweisend:
▪ eine Kollimationslinse (14), die einen divergenten Laserstrahl (12) kollimiert,
▪ einen Kegelspiegel (15), der eine reflektierende Mantelfläche (23) aufweist und einen Laserstrahl, der sich in Richtung der Kegelachse (26) ausbreitet, in einer Ausbreitungsebene (25) senkrecht zur Kegelachse (26) in einen Ringstrahl (24) umformt,
▪ einen Optikträger (32) mit einem ersten Trägerelement (33), an dem die Kollimationslinse (14) befestigt ist, und einem zweiten Trägerelement (34), an dem der Kegelspiegel (15) befestigt ist, und
▪ eine Verbindungseinrichtung (35) mit mindestens einem Verbindungselement (36, 37, 38, 39), das das erste und zweite Trägerelement (33, 34) miteinander verbindet,

wobei das mindestens eine Verbindungselement (36-39) windschief zur Kegelachse (26) des Kegelspiegels (15) angeordnet ist.

## Beschreibung

### Technisches Gebiet

Die vorliegende Erfindung betrifft eine optische Baugruppe mit einem Kegelspiegel gemäß dem Oberbegriff des Anspruchs 1.

### Stand der Technik

US 2012/0275043 offenbart eine bekannte optische Baugruppe mit einem Kegelspiegel, einer Kollimationslinse, einem Optikträger mit einem ersten Trägerelement, an dem die Kollimationslinse befestigt ist, und einem zweiten Trägerelement, an dem der Kegelspiegel befestigt ist, und einer Verbindungseinrichtung, die das erste und zweite Trägerelement miteinander verbindet. Die optische Baugruppe ist im Strahlengang des Laserstrahls hinter einer Laserstrahlquelle angeordnet. Die Laserstrahlquelle erzeugt einen divergenten Laserstrahl, der auf die Kollimationslinse trifft und als kollimierter Laserstrahl die Kollimationslinse verlässt. Der Kegelspiegel weist eine reflektierende Mantelfläche auf, die den kollimierten Laserstrahl umlenkt und in einen Ringstrahl umformt, der sich in einer Ausbreitungsebene senkrecht zur Kegelachse des Kegelspiegels ausbreitet.

Die Verbindungseinrichtung, die das erste und zweite Trägerelement miteinander verbindet, umfasst drei oder mehr dünnwandige Verbindungselemente, die die Trägerelemente miteinander verbinden. Dabei sind die dünnwandigen Verbindungselemente parallel zur Kegelachse des Kegelspiegels angeordnet und die Linien ("extension lines") schneiden sich auf der Kegelachse. Die senkrechte Ausrichtung der dünnwandigen Verbindungselemente hat den Nachteil, dass der Ringstrahl im Bereich der Verbindungselemente vollständig unterbrochen ist und bei der Projektion des Ringstrahls auf einen Untergrund im Ringstrahl Unterbrechungen auftreten. Die Breite der Unterbrechung nimmt mit zunehmendem Abstand vom Kegelspiegel zu.

### Darstellung der Erfindung

Die Aufgabe der vorliegenden Erfindung besteht darin, eine optische Baugruppe mit einem Kegelspiegel dahingehend weiter zu entwickeln, dass Unterbrechungen im Ringstrahl bei der Projektion auf einen Untergrund vermieden werden.

Diese Aufgabe wird bei der eingangs genannten optischen Baugruppe erfindungsgemäß durch die Merkmale des unabhängigen Anspruchs gelöst. Vorteilhafte Weiterbildungen sind in den abhängigen Ansprüchen angegeben.

Erfindungsgemäß ist vorgesehen, dass das mindestens eine Verbindungselement windschief zur Kegelachse des Kegelspiegels angeordnet ist. Zwei Geraden werden als windschief bezeichnet, wenn sie sich weder schneiden noch parallel zueinander angeordnet sind.

Die windschiefe Anordnung des Verbindungselementes zur Kegelachse des Kegelspiegels hat den Vorteil, dass sich ein Teil des Ringstrahls oberhalb des Verbindungselementes und ein Teil des Ringstrahls unterhalb des Verbindungselementes ausbreiten können; nur der Teil des Ringstrahls, der direkt auf das Verbindungselement auftrifft, wird ausgeblendet. Der ausgeblendete Teil des Ringstrahls kann dazu führen, dass die Helligkeit des Ringstrahls in diesem Winkelbereich reduziert ist, wobei diese Reduzierung für den Anwender kaum wahrzunehmen ist. Die Breite des Winkelbereiches, in dem die Helligkeit des Ringstrahls reduziert ist, kann über den Neigungswinkel des Verbindungselementes eingestellt werden; je schräger das Verbindungselement angeordnet ist, umso breiter ist der Winkelbereich mit reduzierter Helligkeit.

In einer Weiterentwicklung weist die Verbindungseinrichtung eine Anzahl von 2n, n ≥ 1 Verbindungselementen auf, wobei n Verbindungselemente als abfallende Verbindungselemente und n Verbindungselemente als ansteigende Verbindungselemente ausgebildet sind und die abfallenden und ansteigenden Verbindungselemente in einer Umfangsrichtung des Kegelspiegels abwechselnd hintereinander angeordnet sind. Durch die gegensinnige Anordnung der Verbindungselemente wird die Stabilität der Verbindung zwischen den Trägerelementen verbessert.

Bevorzugt sind das erste Trägerelement, das zweite Trägerelement und die Verbindungseinrichtung einteilig ausgebildet. Die einteilige Ausbildung des Optikträgers und der Verbindungseinrichtung hat den Vorteil, dass die Justierung der Trägerelemente bereits bei der Herstellung des einteiligen Optikträgers erfolgt.

Besonders bevorzugt sind das erste Trägerelement, das zweite Trägerelement und die Verbindungseinrichtung als einteiliges Druckgussteil ausgebildet. Die Ausbildung als Druckgussteil hat den Vorteil, dass für die Verbindungselemente auch komplexere Formen realisiert werden können.

Bevorzugt sind die Verbindungselemente wendelförmig ausgebildet. Durch die wendeiförmige Ausbildung der Verbindungselemente kann der Teil des Ringstrahls, der durch die Verbindungselemente ausgeblendet wird, gegenüber ebenen Verbindungselementen weiter reduziert werden. Durch die Schrägstellung der Verbindungselemente wird ein Verbindungselement von unterschiedlichen Teilen des Ringstrahls getroffen. Die wendelförmige Ausbildung der Verbindungselemente führt dazu, dass jeder Teil des Ringstrahls, der sich ausgehend von der reflektierenden Mantelfläche des Kegelspiegels radial ausbreitet, senkrecht auf das Verbindungselement auftrifft und der ausgeblendete Teil des Ringstrahls minimiert wird.

In einer bevorzugten Ausführung ist das mindestens eine Verbindungselement um einen Neigungswinkel zwischen 5° und 45° zur Kegelachse geneigt. Über den Neigungswinkel der Verbindungselemente zur Kegelachse kann die Breite des Winkelbereiches, in dem die Helligkeit des Ringstrahls reduziert ist, eingestellt werden. Je schräger die Verbindungselemente angeordnet sind, umso breiter ist der Winkelbereich mit reduzierter Helligkeit.

Bevorzugt weist das mindestens eine Verbindungselement in der Ausbreitungsebene einen Abstand zur Kegelachse zwischen 5 mm und 20 mm auf. Ein Abstand zwischen 5 mm und 20 mm zur Kegelachse erlaubt eine kompakte Ausbildung der optischen Baugruppe.

Die Verbindungseinrichtung weist in einer bevorzugten Ausführungsform eine Anzahl von mindestens 3 Verbindungselementen auf, wobei die Wandstärke der Verbindungselemente zwischen 0,1 mm und 0,7 mm beträgt. Um eine ausreichende Stabilität der Verbindungseinrichtung zu gewährleisten, kann ein Verbindungselement eingesetzt werden, das entsprechend dick ausgebildet sein muss. Alternativ können mehrere dünnwandige Verbindungselemente mit Wandstärken zwischen 0,1 mm und 0,7 mm eine ausreichende Stabilität bieten.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: ein Lasersystem mit einer Laserstrahlquelle, die einen Laserstrahl erzeugt, und einer optischen Baugruppe, die im Strahlengang des Laserstrahls hinter der Laserstrahlquelle angeordnet ist und eine Kollimationslinse, einen Kegelspiegel und einen Optikträger umfasst;
- FIG. 2: eine erste Ausführungsform einer erfindungsgemäßen optischen Baugruppe bestehend aus einer Kollimationslinse, einem Kegelspiegel und einem mehrteiligen Optikträger mit einem ersten und zweiten Trägerelement, die über vier ebene Verbindungselemente verbunden sind; und
- FIG. 3: eine zweite Ausführungsform einer erfindungsgemäßen optischen Baugruppe bestehend aus einer Kollimationslinse, einem Kegelspiegel und einem einteiligen Optikträger mit einem ersten und zweiten Trägerelement, die über vier wendelförmige Verbindungselemente verbunden sind.

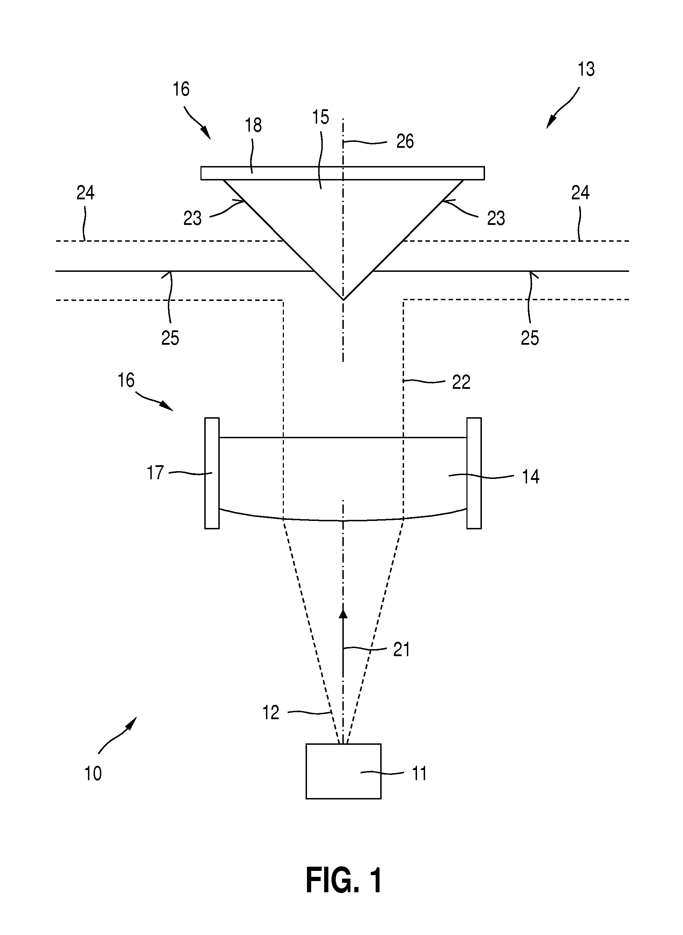

**FIG. 1** zeigt ein Lasersystem **10** mit einer Laserstrahlquelle **11,** die einen Laserstrahl **12** erzeugt, und einer optischen Baugruppe **13,** die im Strahlengang des Laserstrahls 12 hinter der Laserstrahlquelle 11 angeordnet ist. Die optische Baugruppe 12 umfasst eine Kollimationslinse **14,** einen Kegelspiegel **15** und einen Optikträger **16** mit einem ersten Trägerelement **17,** an dem die Kollimationslinse 14 befestigt ist, und einem zweiten Trägerelement **18,** an dem der Kegelspiegel 15 befestigt ist.

Die Laserstrahlquelle 11 ist als Halbleiterlaser ausgebildet, der den Laserstrahl 12 im sichtbaren Spektrum, beispielsweise einen roten Laserstrahl mit einer Wellenlänge von 635 nm oder einen grünen Laserstrahl mit einer Wellenlänge von 510 nm oder 532 nm, erzeugt. Nach dem Austritt des Laserstrahls 12 aus der Laserstrahlquelle 11 kommt es aufgrund der Divergenz zu einer Aufweitung des Laserstrahls, d.h. der Strahldurchmesser des Laserstrahls nimmt mit der Entfernung des Laserstrahls von der Laserstrahlquelle 11 zu.

Der divergente Laserstrahl 12 breitet sich in einer Ausbreitungsrichtung **21** aus und trifft auf die Kollimationslinse 14, die den Laserstrahl 12 in einen kollimierten Laserstrahl **22** umformt. Der kollimierte Laserstrahl 22 breitet sich in der Ausbreitungsrichtung 21 aus und trifft auf den Kegelspiegel 15. Der Kegelspiegel 15 hat die geometrische Form eines geraden Kreiskegels. Ein Kreiskegel ist ein Kegel mit einer kreisförmigen Grundfläche. Ein Kegel ist ein geometrischer Körper, der entsteht, wenn alle Punkte einer in einer Ebene liegenden, begrenzten Fläche geradlinig mit einem Punkt, der außerhalb der Ebene liegt, verbunden werden. Die Fläche wird als Grundfläche, die Begrenzungslinie der Grundfläche als Leitkurve und der Punkt als Kegelspitze bezeichnet. Der Abstand der Kegelspitze von der Grundfläche definiert die Höhe des Kegels. Die Verbindungslinien der Kegelspitze mit der Leitkurve werden als Mantellinien und die Vereinigung der Mantellinien als Mantelfläche des Kegels bezeichnet. Bei einem geraden Kegel mit einer kreisförmigen Grundfläche liegt die Kegelspitze auf der Kegelachse, die senkrecht zur Grundfläche durch den Mittelpunkt der Grundfläche verläuft.

Der kollimierte Laserstrahl 22 trifft auf die Mantelfläche **23** des Kegelspiegels 15, die für die Wellenlänge des Laserstrahls 22 reflektierend ausgebildet ist. Der Laserstrahl 22 wird an der Mantelfläche 23 umgelenkt und in einen Ringstrahl **24** umgeformt. Der Ringstrahl 24 breitet sich in einer Ausbreitungsebene **25,** die senkrecht zur Kegelachse **26** angeordnet ist, aus.

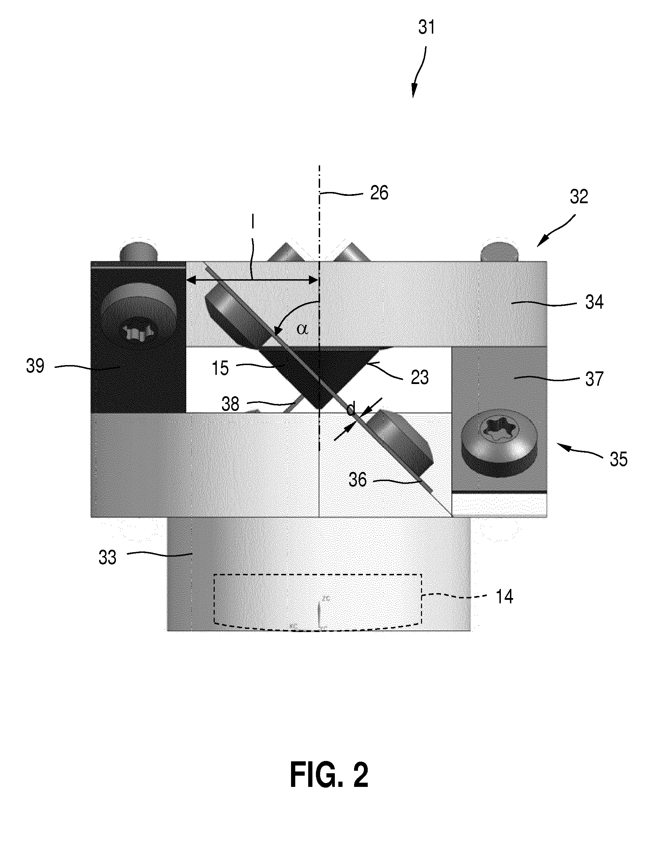

**FIG. 2** zeigt eine erste Ausführungsform einer erfindungsgemäßen optischen Baugruppe **31** bestehend aus der Kollimationslinse 14, dem Kegelspiegel 15, einem mehrteiligen Optikträger **32** mit einem ersten Trägerelement **33,** an dem die Kollimationslinse 14 befestigt ist, und einem zweiten Trägerelement **34,** an dem der Kegelspiegel 15 befestigt ist, und einer Verbindungseinrichtung **35,** die das erste und zweite Trägerelement 33, 34 miteinander verbindet.

Die Verbindungseinrichtung 35 umfasst vier ebene Verbindungselemente **36, 37, 38, 39,** die als dünnwandige Blechteile ausgebildet sind. Die Verbindungselemente 36, 38 sind als abfallende Verbindungselemente und die Verbindungselemente 37, 39 als ansteigende Verbindungselemente ausgebildet. Die abfallenden Verbindungselemente 36, 38 und die ansteigenden Verbindungselemente 37, 39 sind in einer Umfangsrichtung des Kegelspiegels 15 abwechselnd hintereinander angeordnet. Durch die gegensinnige Anordnung der Verbindungselemente 36-39 wird die Stabilität der Verbindung zwischen den Trägerelementen 33, 34 verbessert.

Die Verbindungselemente 36-39 sind jeweils unter einem Neigungswinkel α zur Kegelachse 26 des Kegelspiegels 15 geneigt und weisen einen Abstand I zur Kegelachse 26 auf. Der Neigungswinkel α beträgt im Ausführungsbeispiel der optischen Baugruppe 31 ca. 45° zur Kegelachse 26. Über den Neigungswinkel α der Verbindungselemente kann die Breite des Winkelbereiches, in dem die Helligkeit des Ringstrahls 24 reduziert ist, eingestellt werden; je schräger die Verbindungselemente 36-39 angeordnet sind, umso breiter ist der Winkelbereich mit reduzierter Helligkeit. Der Abstand I der Verbindungselemente 36-39 zur Kegelachse 26 liegt zwischen 5 mm und 20 mm und entspricht im Ausführungsbeispiel der optischen Baugruppe 31 ungefähr dem Durchmesser des Kegelspiegels 15. Ein Abstand zwischen 5 mm und 20 mm zur Kegelachse 26 erlaubt eine kompakte Ausbildung der optischen Baugruppe 31. Die Verbindungselemente 36-39 sind als dünnwandige Blechteile mit einer Wandstärke **d** ausgebildet; die Wandstärke d liegt zwischen 0,1 mm und 0,7 mm.

Eine Reduzierung bis zu 20 % ist für den Anwender akzeptabel und die Verbindungseinrichtung 35 wird so ausgelegt, dass 20 % nicht überschritten werden. Für typische Messaufgaben auf Baustellen eignen sich Ringstrahlen mit Strahlbreiten zwischen 2 mm und 6 mm. Die Reduzierung der Helligkeit ist abhängig vom Neigungswinkel α der Verbindungselemente 36-39 zur Kegelachse 26 und von der Wandstärke d der Verbindungselemente 36-39. Je geringer die Wandstärke d ist, umso kleiner kann der Neigungswinkel α zur Kegelachse 26 ausgebildet werden. Bei schmalen Strahlbreiten (2 mm) sind ein Neigungswinkel α von 20° bis 45° und eine Wandstärke d von maximal 0,3 mm geeignet, um die Reduzierung unter 20 % zu halten. Für mittlere Strahlbreiten (4 mm) eignen sich Neigungswinkel α zwischen 10° und 40° und Wandstärke d von maximal 0,5 mm, um die Reduzierung unter 20 % zu halten. Bei breiten Strahlbreiten (6 mm) sind Neigungswinkel α von 5° bis 45° und Wandstärke d zwischen 0,1 mmm und 0,7 mm geeignet, um die Reduzierung unter 20 % zu halten.

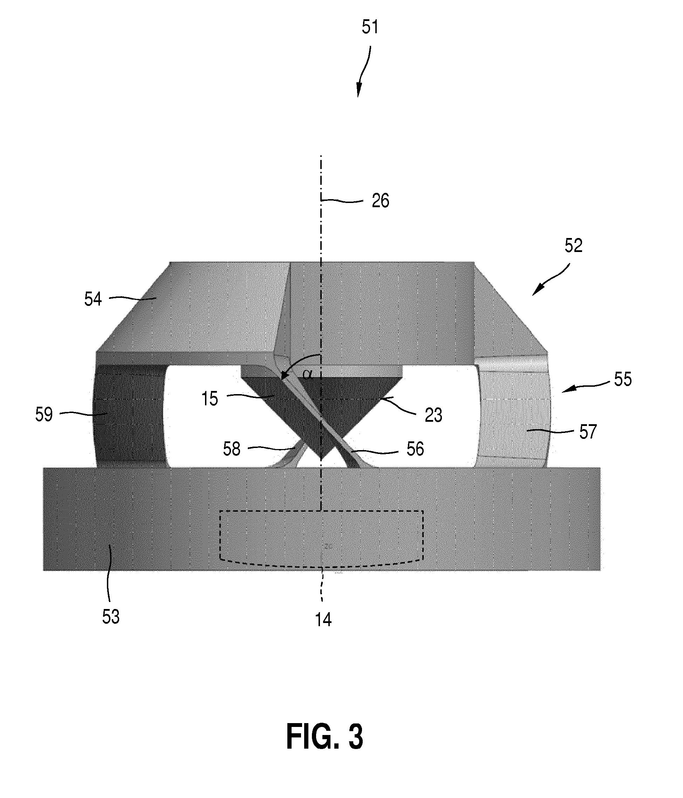

**FIG. 3** zeigt eine zweite Ausführungsform einer erfindungsgemäßen optischen Baugruppe **51** bestehend aus der Kollimationslinse 14, dem Kegelspiegel 15, einem einteiligen Optikträger **52** mit einem ersten Trägerelement **53,** an dem die Kollimationslinse 14 befestigt ist, und einem zweiten Trägerelement **54,** an dem der Kegelspiegel 15 befestigt ist, und einer Verbindungseinrichtung **55,** die das erste und zweite Trägerelement 53, 54 miteinander verbindet.

Die Verbindungseinrichtung 55 umfasst vier Verbindungselemente **56, 57, 58, 59,** die mit dem ersten und zweiten Trägerelement 53, 54 einen einteiligen Optikträger 52 bilden. Die Verbindungselemente 56, 58 sind als abfallende Verbindungselemente und die Verbindungselemente 57, 59 als ansteigende Verbindungselemente ausgebildet; die abfallenden Verbindungselemente 56, 58 und ansteigenden Verbindungselemente 57, 59 sind in Umfangsrichtung des Kegelspiegels 15 abwechselnd hintereinander angeordnet.

Die Verbindungselemente 56, 57, 58, 59 der Verbindungseinrichtung 55 unterscheiden sich von den Verbindungselementen 36, 37, 38, 39 der Verbindungseinrichtung 35 dadurch, dass sie wendelförmig ausgebildet sind. Durch die wendelförmige Ausbildung der Verbindungselemente 56, 57, 58, 59 kann der Teil des Ringstrahls, der durch die Verbindungselemente 56, 57, 58, 59 ausgeblendet wird, gegenüber ebenen Verbindungselementen weiter reduziert werden. Bezüglich der Neigungswinkel α zur Kegelachse 26, der Abstände I zur Kegelachse 26 und der Wandstärken d gelten für die Verbindungselemente 56-59 die gleichen Einschränkungen wie für die Verbindungselemente 36-39 der FIG. 2.

Der kollimierte Laserstrahl 22 wird an der reflektierenden Mantelfläche 23 des Kegelspiegels 15 umgelenkt und in den Ringstrahl 24 umgeformt. Durch die Schrägstellung der Verbindungselemente wird ein Verbindungselement von unterschiedlichen Teilen des Ringstrahls 24 getroffen. Die wendelförmige Ausbildung der Verbindungselemente 56, 57, 58, 59 führt dazu, dass jeder Teil des Ringstrahls, der sich ausgehend von der reflektierenden Mantelfläche 23 radial ausbreitet, senkrecht auf das Verbindungselement auftrifft und der ausgeblendete Teil des Ringstrahls 24 minimiert wird.

## Patentansprüche

1. Optische Baugruppe (31; 51), aufweisend:
▪ eine Kollimationslinse (14), die einen Laserstrahl (12) kollimiert,
▪ einen Kegelspiegel (15), der eine reflektierende Mantelfläche (23) aufweist und einen Laserstrahl, der sich in Richtung der Kegelachse (26) ausbreitet, in einer Ausbreitungsebene (25) senkrecht zur Kegelachse (26) in einen Ringstrahl (24) umformt,
▪ einen Optikträger (32; 52) mit einem ersten Trägerelement (33; 53), an dem die Kollimationslinse (14) befestigt ist, und einem zweiten Trägerelement (34; 54), an dem der Kegelspiegel (15) befestigt ist, und
▪ eine Verbindungseinrichtung (35; 55) mit mindestens einem Verbindungselement (36, 37, 38, 39; 56, 57, 58, 59), das das erste und zweite Trägerelement (33, 34; 53, 54) miteinander verbindet,
**dadurch gekennzeichnet, dass** das mindestens eine Verbindungselement (36-39; 56-59) windschief zur Kegelachse (26) des Kegelspiegels (15) angeordnet ist.

2. Optische Baugruppe nach Anspruch 1, **dadurch gekennzeichnet, dass** die Verbindungseinrichtung (35; 55) eine Anzahl von 2n, n ≥ 1 Verbindungselementen (36-39; 56-59) aufweist, wobei n Verbindungselemente als abfallende Verbindungselemente (36, 38; 56, 58) und n Verbindungselemente als ansteigende Verbindungselemente (37, 39; 57, 59) ausgebildet sind und die abfallenden und ansteigenden Verbindungselemente (36, 38, 37, 39; 56, 58, 57, 59) in einer Umfangsrichtung des Kegelspiegels (15) abwechselnd hintereinander angeordnet sind.

3. Optische Baugruppe nach einem der Ansprüche 1 bis 2, **dadurch gekennzeichnet, dass** das erste Trägerelement (53), das zweite Trägerelement (54) und die Verbindungseinrichtung (55) einteilig ausgebildet sind.

4. Optische Baugruppe nach Anspruch 3, **dadurch gekennzeichnet, dass** das erste Trägerelement (53), das zweite Trägerelement (54) und die Verbindungseinrichtung (55) als einteiliges Druckgussteil ausgebildet sind.

5. Optische Baugruppe nach einem der Ansprüche 1 bis 4, **dadurch gekennzeichnet, dass** das mindestens eine Verbindungselement (56-59) wendelförmig ausgebildet ist.

6. Optische Baugruppe nach einem der Ansprüche 1 bis 5, **dadurch gekennzeichnet, dass** das mindestens eine Verbindungselement (36-39; 56-59) um einen Neigungswinkel (α) zwischen 5° und 45° zur Kegelachse (26) geneigt ist.

7. Optische Baugruppe nach einem der Ansprüche 1 bis 6, **dadurch gekennzeichnet, dass** das mindestens eine Verbindungselement (36-39; 56-59) in der Ausbreitungsebene (25) einen Abstand (I) zur Kegelachse (26) zwischen 5 mm und 20 mm aufweist.

8. Optische Baugruppe nach einem der Ansprüche 1 bis 7, **dadurch gekennzeichnet, dass** die Verbindungseinrichtung (35; 55) eine Anzahl von mindestens 3 Verbindungselementen (36-39; 56-59) aufweist, wobei die Wandstärke (d) der Verbindungselemente (36-39; 56-59) zwischen 0,1 mm und 0,7 mm beträgt.
